# EUROPEAN PATENT SPECIFICATION

(11) **EP 3 879 649 B1**
(45) Date of publication and mention of the grant of the patent: **01.05.2024**
(21) Application number: 21161676.8
(22) Date of filing: 10.03.2021
(51) Int. Cl.: H02G 3/32, F16L 3/12, F16L 3/133, F16L 3/137, F16L 3/14, F16L 3/23, F16B 2/20, F16B 2/22, B65D 63/10

(54) **DEVICES AND METHODS FOR HOLDING CABLES**
VORRICHTUNGEN UND VERFAHREN ZUM HALTEN VON KABELN
DISPOSITIF ET PROCÉDÉ DE MAINTIEN DE CÂBLES

(30) Priority: 10.03.2020 US 202016814472
(43) Date of publication of application: 15.09.2021
(73) Proprietor: CommScope Technologies LLC, Hickory, NC 28602 (US)
(72) Inventor: VACCARO, Ronald A., Taylorsville, NC 28681 (US); JOSHI, Aviral, Chicago, IL 60616 (US); STOCKMAN, Christopher, Bella Visa, AR 72714 (US)
(74) Representative: Meissner Bolte Partnerschaft mbB

(56) References cited:
- EP-A2- 1 186 817
- WO-A1-86/02709
- US-A- 4 342 438
- US-A1- 2002 084 388

## Description

### FIELD

The present invention relates to devices and methods for holding cables.

### BACKGROUND

Currently, there a variety of metallic (*e.g*., stainless steel) cable hangers that are used to hold or bundle and secure cables to the top of telecommunications towers, such as, for example, U.S. Patent No. 9,306,380 to Vaccaro, U.S. Patent No. 9,866,004 to Vaccaro et al., and U.S. Patent No. 9,903,510 to Joshi. However, the use of metal components near an antenna on cell sites can be a source of unwanted passive intermodulation (PIM) in the modern radio frequency (RF) environment. There may be a need for non-metallic, non-magnetic cable hangers for cables used in small cell telecommunications towers that reduce costs and allow for easy installation, while alleviating technical performance concerns, such as, PIM. EP 1 186 817 and WO 86/02709 present prior art according to the preamble of claim 1.

### SUMMARY

The invention is defined in the device claim 1, with an associated method as seen in claim 10. The dependent claims provide preferred embodiments,

### BRIEF DESCRIPTION OF THE DRAWINGS

**FIG. 1** is a front view of a device adapted for holding one or more discrete cables according to embodiments of the present invention.
**FIG. 2** is a top view of the device of **FIG. 1****.**
**FIG. 3** is a top view of the device of **FIG. 1****,** in combination with a plurality of discrete cables, being secured to a mounting structure according to embodiments of the present invention.
**FIG. 4** is a top view of the device in combination with a plurality of discrete cables shown in **FIG. 3** secured to a mounting structure.
**FIG. 5** is an enlarged top view of an alternative embodiment of the mounting portion of the device of **FIG. 1****.**
**FIG. 6** is a top view of a device adapted for holding one or more discrete cables according to embodiments of the present invention.
**FIG. 7** is a top view of the device of **FIG. 6** in combination with a plurality of discrete cables.
**FIG. 8** is a front view of a device adapted for holding one or more discrete cables according to an embodiment not part of the present invention.
**FIG. 9** is a side perspective view of a securing feature according to embodiments not covered by the present invention.
**FIG. 10A** is a front perspective view of a device adapted for holding one or more discrete cables according to embodiments not covered by the present invention.
**FIG. 10B** is a side view of the device of **FIG. 10A****.**
**FIG. 10C** is a top view of the device of **FIG. 10A****.**
**FIG. 10D** is an enlarged side view of the securing feature of the device of **FIG. 10A** with the plug inserted into the cavity of the securing feature.

### DETAILED DESCRIPTION

The present invention now will be described more fully hereinafter with reference to the accompanying drawings, in which illustrative embodiments of the invention are shown.

In the figures, certain layers, components or features may be exaggerated for clarity, and broken lines illustrate optional features or operations unless specified otherwise. This invention may, however, be embodied in many different forms and should not be construed as limited to the embodiments set forth herein; rather, these embodiments are provided so that this disclosure will be thorough and complete, and will fully convey the scope of the invention to those skilled in the art.

Well-known functions or constructions may not be described in detail for brevity and/or clarity.

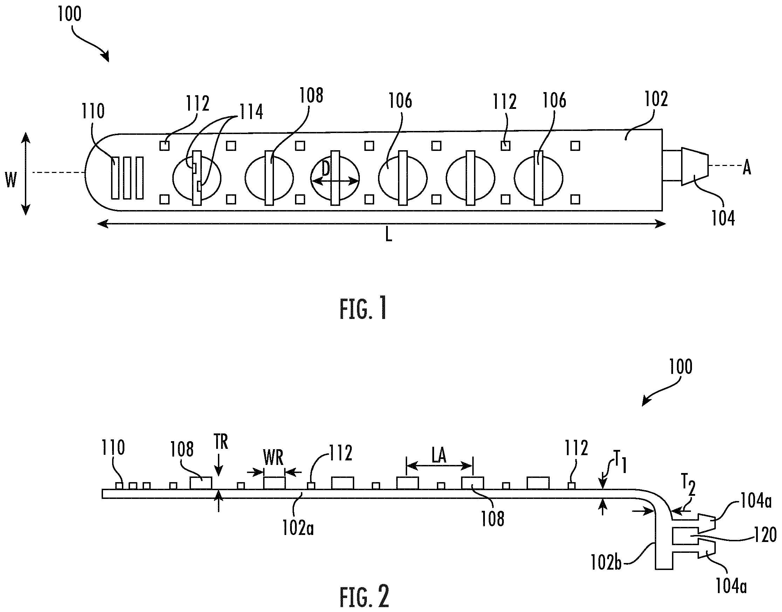

Referring now to the figures, devices adapted for holding one or more discrete cables are illustrated in **FIGS. 1-10D****.** Referring to **FIGS. 1-4****,** a device **100** adapted for holding one or more discrete cables **130** may comprise a flexible main body **102,** a securing feature **104,** and a plurality of apertures **106.** Each of these features will be described in greater detail below.

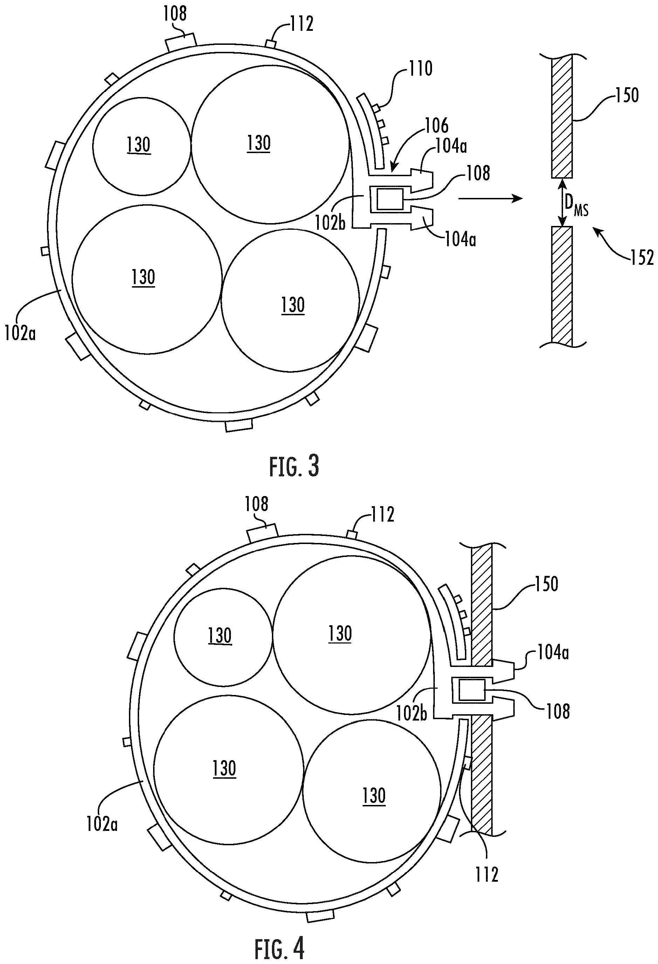

As shown in **FIGS. 1** and **2****,** the main body **102** of the device **100** comprises a wrapping portion **102a** and a mounting portion **102b.** The main body **102** has a length (**L**), a width (**W**), a thickness (**T₁/T₂**), and a longitudinal axis (**A**). In some embodiments, the main body **102** has a length (**L**) in the range of about 7 inches to about 12 inches, a width (**W**) in the range of about 1 inch to about 2 inches, and a thickness (**T₁/T₂**) in the range of about 0.062 inches to about 0.5 inches. The main body **102** is flexible and configured to be wrapped such that the main body **102** can circumscribe one or more discrete cables **130** (*see*, *e.g.*, **FIGS. 3** and **4**). According to the invention, the main body **102** may be formed of a polymeric material. For example, in some embodiments, the main body **102** may comprise rubber, polypropylene, nylon 6,6, or acetal.

The device **100** of the present invention comprises a securing feature **104.** The securing feature **104** is attached to or is integral with the mounting portion **102b** of the main body **102.** The securing feature **104** may be configured to be secured to a mounting structure **150** (*see*, *e.g*., **FIGS. 3** and **4**). For example, in some embodiments, the securing feature **104** may be configured to be secured to a telecommunications tower or monopole. As shown in **FIGS. 2-7****,** in some embodiments, the securing feature **104** may comprise two barbs **104a** separated by a cavity **120.** As discussed in further detail below, in some embodiments, the cavity **120** is configured to cooperate with a rib **108** when holding or bundling together one or more discrete cables **130** (*see*, *e.g*., **FIGS. 3-5**).

As shown in **FIG. 2****,** in some embodiments, the thickness (**T₂**) of the mounting portion **102b** of the main body **102** may be greater than the thickness (**T₁**) of the wrapping portion **102a** of the main body **102.** For example, in some embodiments, the thickness (**T₂**) of the mounting portion **102b** of the main body **102** may be in a range of 0.15 inches to about 0.5 inches and the thickness (**T₁**) of the wrapping portion **102a** of the main body **102** may be in a range of about 0.062 inches to about 0.25 inches. Having a greater thickness (**T₂**) of the mounting portion **102b** of the main body **102** may help to increase the structural strength of the device **100** and provide a more solid formation to the device **100** when the device **100** is secured to a mounting structure **150** (*see*, *e.g*., **FIGS. 3** and **4**).

Still referring to **FIGS. 1** and **2****,** the device **100** of the present invention comprises a plurality of apertures **106** spaced apart along the longitudinal axis (**A**) of the wrapping portion **102a** of the main body **102.** Each aperture **106** is spaced apart a distance (**L_{A}**). In some embodiments, the distance (**L_{A}**) between each aperture **106** is in the range of about 1 inch to about 2 inches. According to the invention, the securing feature **104** may be configured to be received through one of the apertures **106** when the main body **102** of the device **100** is wrapped around one or more discrete cables **130** (*e.g*., bundling together a plurality of cables **130**). Thus, each aperture **106** may be sized such that the securing feature **104** may be inserted through a respective aperture **106.** For example, in some embodiments, each aperture **106** may have a diameter (**D**) in the range of about 0.5 inches to about 1 inch (nominally, about 0.75 inches).

As shown in **FIG. 1****,** in some embodiments, each aperture **106** comprises a rib **108** that extends across the respective aperture **106.** Each rib **108** may be aligned perpendicular or parallel to the longitudinal axis (**A**) of the main body **102.** For example, as shown in **FIG. 1****,** the ribs **108** are aligned perpendicular to the longitudinal axis (**A**). According to the invention, each rib **108** is configured to cooperate with the securing feature **104** when the device **100** is holding one or more discrete cables **130** and optionally when the device **100** is being secured to a mounting structure **150** (*see*, *e.g.*, **FIG. 3**) to provide additional stability.

In some embodiments, each rib **108** may have a thickness (**T_{R}**) in the range of about 0.25 inches to about 0.5 inches and a width (**W_{R}**) in the range of about 0.15 inches to about 0.45 inches. In some embodiments, the thickness (**T_{R}**) and width (**W_{R}**) of each rib **108** correspond to the depth (**D_{C}**) and width (**W_{C}**), respectively, of the cavity **120** of the securing feature **104** (*see*, *e.g*., **FIG. 4**).

In some embodiments, the main body **102** of the device **100** may comprise a plurality of stabilizing members (or feet) **112** (*see*, *e.g.*, **FIGS. 1-4**). The stabilizing members **112** may extend radially outwardly from one side of the wrapping portion **102a** of the main body **102.** The stabilizing members **112** may improve stability of the device **100** by helping to limit or prevent the device **100** from rocking/swaying after the securing feature **104** is inserted through an aperture **106** and the device **100** is secured to a mounting structure **150** (*see*, *e.g.*, **FIGS. 3** and **4**).

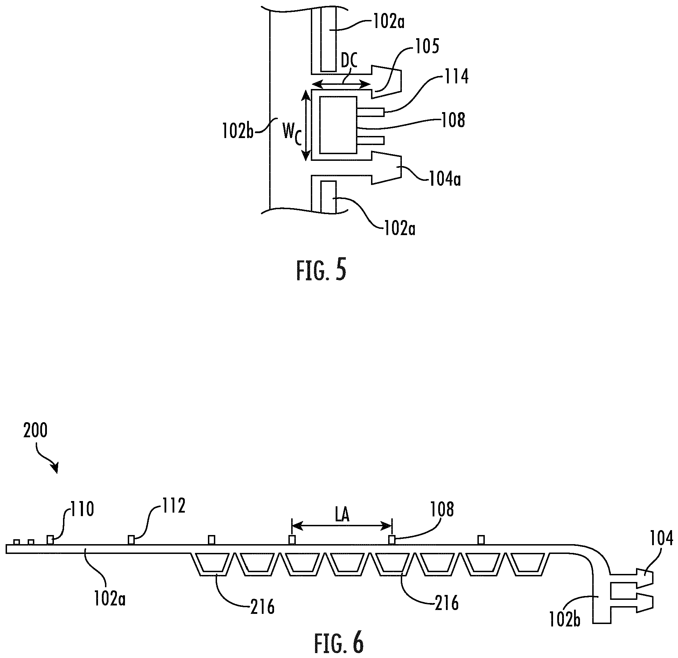

Referring now to **FIGS. 3** and **4****,** as discussed above, the device **100** of the present invention is adapted for holding one or more discrete cables **130** and securing the one or more cables **130** to a mounting structure **150.** As shown in **FIG. 3****,** the main body **102** of the device **100** has sufficient flexibility to be wrapped around a plurality of discrete cables **130.** In some embodiments, the one or more discrete cables **130** comprise fiber optic cables, hybrid fiber/power cables and/or coaxial cables. After the wrapping portion **102a** of the main body **102** is wrapped to circumscribe the cable(s) **130,** the securing feature **104** is inserted through one of the apertures **106** such that the main body **102** holds or bundles together the cables **130.** When the securing feature **104** is inserted through one of the apertures **106,** the rib **108** within the aperture **106** cooperates with the securing feature **104** (*e.g*., the cavity **120** between the barbs **104a** and the shoulders **105** of each barb **104a**) (*see also*, *e.g.*, **FIG. 5**) to hold the main body **102** of the device **100** circumscribed around the one or more cables **130.**

As shown in **FIGS. 3** and **4****,** the device **100,** in combination with a bundle of cables **130,** may be secured to a mounting structure **150** by further inserting the securing feature **104** into a pre-configured aperture **152** in the mounting structure **150.** For example, in some embodiments, the aperture **152** in the mounting structure **150** may be configured to receive the barbs **104a** of the securing feature **104,** thereby securing the device **100** (and the bundle of cables **130**) to the mounting structure **150.** In some embodiments, the securing feature **104** is configured to be secured in an aperture **152** in the mounting structure **150** having a diameter (**D_{MS}**) in the range of about 0.5 inches to about 1 inch (nominally, about 0.75 inches).

As discussed above, each rib **108** may be aligned either perpendicular or parallel to the longitudinal axis (**A**) of the main body **102.** The orientation of each rib **108** within an aperture **106** may correspond with the orientation of the securing feature **104.** This allows the ribs **108** to cooperate with the securing feature **104** when holding or bundling together one or more discrete cables **130** and/or securing the device **100** to a mounting structure **150.** For example, when the securing feature **104** comprises two barbs **104a,** if the orientation of each rib **108** is perpendicular to the longitudinal axis (**A**) of the main body **102,** then the orientation of the two barbs **104a** should be parallel to the longitudinal axis (**A**) of the main body **102.** This orientation allows the ribs **108** to properly align with the cavity **120** between the barbs **104a** of the securing feature **104.** As mentioned above, in some embodiments, the barbs **104a** may each comprise a shoulder **105** that is configured to engage the rib **108** when the rib **108** is within the cavity **120** (*see also*, *e.g*., **FIG. 5**).

If the orientation of each rib **108** is parallel to the longitudinal axis (**A**) of the main body **102,** then the orientation of the two barbs **104a** should be rotated 90 degrees relative to the longitudinal axis (**A**) of the main body **102** (*i.e*., perpendicular). The ribs **108,** in cooperation with the cavity **120** (and shoulders **105**) of the securing feature **104,** may provide support to help prevent the securing feature **104** from snapping in and/or out of the aperture **152** in the mounting structure **150.**

Referring now to **FIG. 5****,** in some embodiments, the ribs **108** may comprise a plurality of protrusions **114.** The protrusions **114** may be staggered along the length of each rib **108** (*see also*, *e.g*., **FIG. 1**). The protrusions **114** may provide added support to the rib **108** when the rib **108** is secured in the cavity **120** of the securing feature **104.** For example, the protrusions **114** may provide additional support to the barbs **104a** to help prevent the securing feature **104** from snapping in and/or out of the aperture **152** in the mounting structure **150.**

In some embodiments, the device **100** of the present invention may comprise at least one grippingtab **110** (*see*, *e.g*., **FIG. 1**). The at least one gripping tab **110** may be attached to or integral with the main body **102.** The at least one gripping tab **110** may reside at an end of the main body **102** opposite to the securing feature **104** (*i.e*., opposite to the mounting portion **102b** of the main body **102**). The gripping tab(s) **110** provides the technician a place to hold the device **100** when wrapping the device **100** around the cable(s) **130.** The gripping tab(s) **110** may help to reduce grip slippage during use of the device **100.**

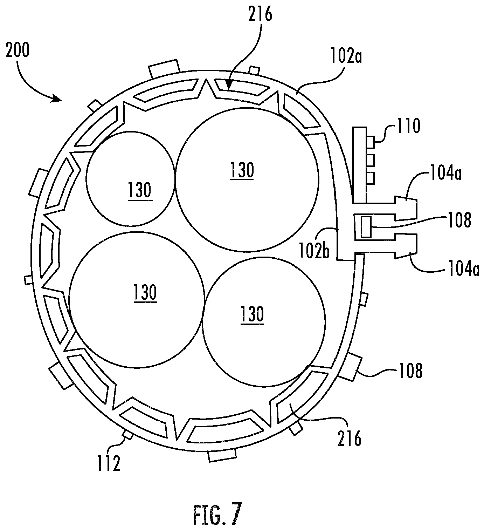

Referring now to **FIGS. 6** and **7****,** a device **200** adapted for holding one or more discrete cables is shown therein. The device **200** is similar to the device **100** shown above, except the device **200** may further comprise one or more conforming members **216.** As shown in **FIG. 6****,** the one or more conforming members **216** may reside along the "inside" of the wrapping portion **102a** of the main body **102** of the device **200.** In some embodiments, the conforming members **216** may be configured to further secure or "cushion" the one or more discrete cables **130** when the cable(s) **130** are circumscribed by the main body **102.** The conforming members **216** may be in a variety of different shapes and sizes. For example, in some embodiments, the conforming members **216** have a polygonal or arced shape, and/or may be hollow (*see*, *e.g.*, **FIGS. 6** and **7**) or solid.

In some embodiments, the conforming members **216** may comprise a separate unitary member. In some embodiments, the conforming members **216** may comprise a molded soft polymer material. The molded polymer material may be pliable and/or soft such that the conforming member(s) **216** may mold or "conform" to the one or more cables **130** as the device **200** is wrapped around the cable(s) **130.** For example, in some embodiments, the conforming members **216** may comprise a silicone, a silicone gel or a thermoplastic elastomer.

The conforming members **216** may take up "slack" and/or provide a "cushion" for the cable(s) **130** in the main body **102** that may result due to the spacing (or periods) (**L_{A}**) between the plurality of apertures **106** when the device **200** is wrapped around one or more cables **130.** For example, during wrapping of the device **200,** inserting the securing feature **104** through one aperture **106** may result in the device **200** being too loose around the cable(s) **130,** whereas inserting the securing feature **104** through the next aperture **106** may result in the device being too tight around the cable(s) **130.** The conforming members **216** may assist in taking up (reducing) the "slack" in the device **200** and/or provide additional support ("cushion") to the cable(s) **130** from differences in tightness of the device **200** from aperture **106** to aperture **106.**

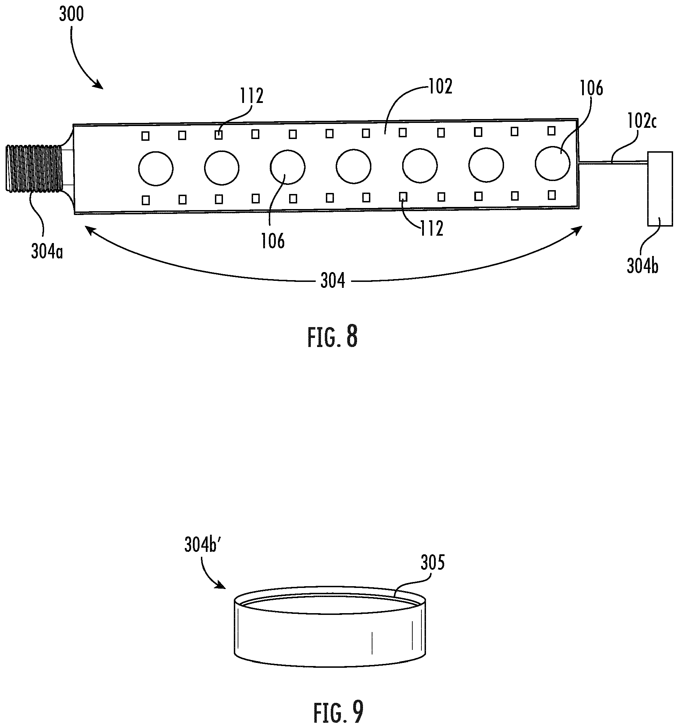

Referring now to **FIG. 8****,** which corresponds to an embodiment not covered by the claims, a device **300** adapted for holding one or more discrete cables is shown therein. The device **300** is similar to the devices **100, 200** shown above, except that the device **300** comprises an alternative securing feature **304** and the main body **102** of the device **300** comprises a frangible portion **102c.**

As shown in **FIG. 8****,** and not a part of the claimed subject-matter, the securing feature **304** may comprise a threaded post **304a** and a capture member **304b.** The threaded post **304a** may be configured to be received through one of the plurality of apertures **106** when the main body **102** of the device **300** is wrapped around the one or more discrete cables **130.** For example, in some embodiments, the threaded post **304a** is configured to be received through an aperture **106** having a diameter (**D**) in the range of about 0.5 inches to about 1 inch (nominally, about 0.75 inches). The capture member **304b** may be configured to be secured (*e.g*., threaded or snapped) onto to the threaded post **304a.**

In some embodiments, not covered by the claims, the main body **102** of the device **300** may comprise a frangible portion **102c.** The frangible portion **102c** may attach the capture member **304b** to the device **300.** The frangible portion **102c** is configured to break away from the main body **102** such that the capture member **304b** may be detached from the main body **102** of the device **300,** thereby allowing the capture member **304b** to be secured onto the threaded post **304a.** In some embodiments, the threaded post **304a** may be a threaded bolt and the capture member **304b** may be a breakaway nut (*see*, *e.g.*, **FIG. 8**).

In some embodiments, a capture member **304b'** may comprise an interior ridge **305** (*see*, *e.g*., **FIG. 9**). The ridge **305** may be configured to interlock with at least one thread of the post **304a.** For example, in some embodiments, the capture member **304b'** may be pushed onto the threaded post **304a** until the ridge **305** interlocks with at least one of the threads of the post **304a.** Other securing features **304** may be used as an alternative to the breakaway nut **304b, 304b',** such as, for example, an elastic band or a retaining ring. Also, the post **304a** may have annular, rather than helical, threads, particularly when used with a capture member **304b'** having a ridge **305.**

A securing feature **104** comprising a threaded bolt **304a** and breakaway nut **304b** may help to mitigate the stress that is applied on the securing feature **304** when the main body **102** of the device **300** circumscribes the cables **130.** The additional retaining capability may reduce the chances of the securing feature **304** failing while the device is holding one or more cables **130.**

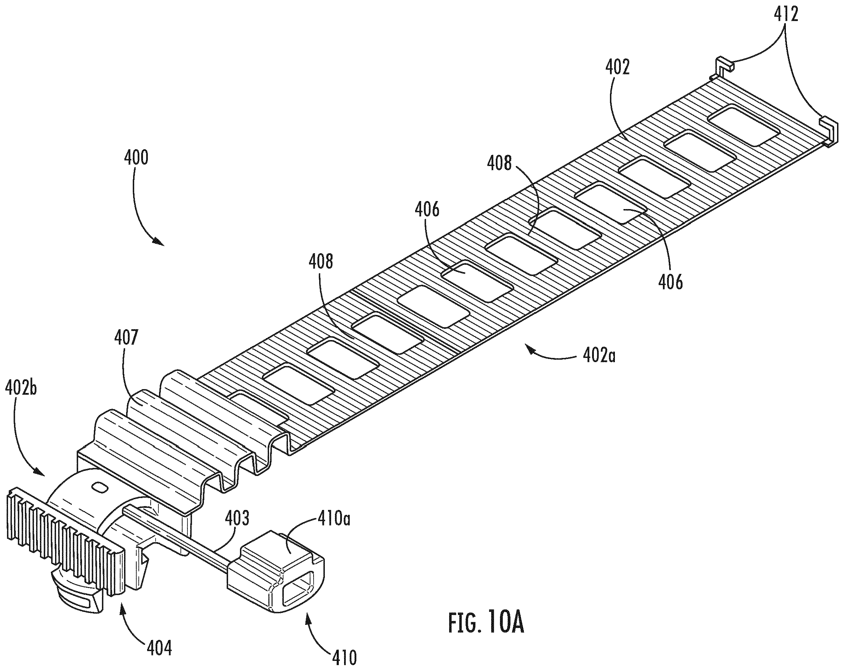

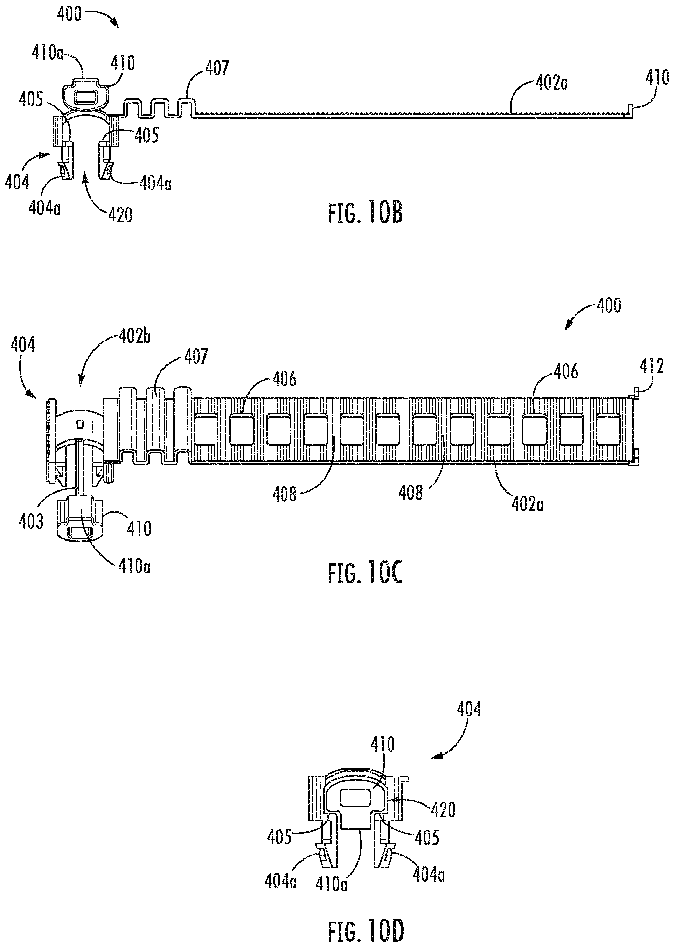

Referring now to **FIGS. 10A-10D****,** a device **400** adapted for holding one or more discrete cables is illustrated. The device **400** is similar to the device **100** described herein in that the device **400** comprises a flexible main body **402,** a securing feature **404,** and a plurality of apertures **406.** The main body **402** is flexible and configured to be wrapped such that the main body **402** can circumscribe one or more discrete cables **130.** The main body **402** of the device **400** may comprise a wrapping portion **402a** and a mounting portion **402b.** In some embodiments, the main body **402** may be formed of a polymeric material. For example, in some embodiments, the main body **402** may comprise rubber, polypropylene, nylon 6,6, or acetal.

Similar to device **100,** the securing feature **404** of device **400** may be attached to or integral with the mounting portion **402b** of the main body **402.** The securing feature **404** may be configured to be secured to a mounting structure **150.** For example, in some embodiments, the securing feature **404** may be configured to be secured to a telecommunications tower, cable hanger adapter, or monopole.

As shown in **FIGS. 10B****,** in some embodiments, the securing feature **404** may comprise two barbs **404a** separated by a cavity **420.** Each barb **404a** is configured to be received by a respective aperture **406** in the wrapping portion **402a** of the main body **402** of the device **400.** In some embodiments, the barbs **404a** may each comprise a shoulder **405** that may further define the cavity **120.**

The cavity **420** is configured to receive a section (or "rib") **408** of the main body **402** located between each aperture **406.** For example, when holding or bundling together one or more discrete cables **130,** as each barb **404a** of the securing feature **404** is inserted through a respective aperture **406,** the rib **408** between each aperture **406** is received within the cavity **420.** The barbs **404a** (*i.e*., the securing feature **404**) may then be secured to a mounting structure **150,** thereby securing the rib **408** within the cavity **420.**

In some embodiments, between the wrapping portion **402a** and the mounting portion **402b,** the device **400** may comprise a plurality of undulations **407.** Similar to the stabilizing members **112** described herein, the undulations **407** may improve stability of the device **400** by helping to limit or prevent the device **400** from rocking/swaying after the securing feature **404** is inserted through an aperture **406** and the device **400** is secured to a mounting structure **150.** In addition, the undulation **407** may contribute to the flexibility of the device **400** to help the wrapping portion **402a** to circumscribe one or more discrete cables **130.**

As shown in **FIGS. 10A-10D****,** in some embodiments, the device **400** may further comprise a plug **410** coupled to or integral with the mounting portion **402b** of the main body **402.** The plug **410** is sized and configured to be inserted into the cavity **420.** In some embodiments, the plug **410** is coupled to or integral with the mounting portion **402b** via a flex member **403.** The flex member **403** is configured such that the plug **410** may be inserted into the cavity **420** of the securing feature **404** while remaining coupled to the mounting portion **402b** of the device **400.** In some embodiments, the plug **410** may comprise a protrusion **410a.** As shown in **FIG. 10D****,** the protrusion **410a** may be sized and configured such that when the plug **410** is inserted into the cavity **420** of the securing feature **404,** the protrusion **410a** extends between the shoulders **405** of the barbs **404a,** thereby providing additional support to the barbs **404a** to help prevent the securing feature **404** from snapping in and/or out of an aperture **152** in the mounting structure **150.**

In some embodiments, not covered by the claims, the device **400** may further comprise two guide hooks **412** adjacent to the free end of the wrapping portion **402a** of the main body **402.** The guide hooks **412** may be used to manage excess of the wrapping portion **402a** when the device **400** is wrapped to circumscribe the cable(s) **130.** For example, once wrapped around one or more discrete cables **130** (*e.g*., bundling together a plurality of cables **130**), the installer may hook the remaining wrapping portion **402a** of the device **400** onto itself using the two guide hooks **412.**

A method for holding one or more discrete cables is provided according to claim 10. In some embodiments, the method may further comprise inserting the securing feature through an aperture in the mounting structure, thereby securing the device and the one or more cables to the mounting structure.

## Claims

1. A device (100) for holding cables, in combination with one or more discrete cables (130), the device comprising:
a flexible main body (102) formed of a polymeric material having a length, a width, a thickness, and a longitudinal axis, the main body including a wrapping portion (102a) and a mounting portion (102b), wherein the wrapping portion is configured to be wrapped such that the main body circumscribes the one or more discrete cables;
a securing feature (104) attached to or integral with the mounting portion of the main body and configured to be secured to a mounting structure (150); and
a plurality of apertures (106) along the longitudinal axis of the wrapping portion of the main body, each aperture adapted to receive the securing feature,
wherein the main body is wrapped around the one or more discrete cables and the securing feature is received through at least one of the plurality of apertures, thereby holding the one or more discrete cables,
**characterised in that**: each aperture comprises a rib (108) extending across the aperture, the rib configured to cooperate with the securing feature when holding one or more discrete cables and optionally securing the device to the mounting structure.

2. The device of Claim 1, wherein each rib is perpendicular to the longitudinal axis of the main body.

3. The device according to any of the previous claims, wherein the securing feature comprises two barbs separated by a cavity, the cavity configured to cooperate with a respective rib when securing the device to the mounting structure.

4. The device according to any of the previous claims, further comprising a plug feature configured to be inserted into the securing feature when holding the one or more discrete cables.

5. The device according to any of the previous claims, further comprising a plurality of undulations between the mounting portion and the wrapping portion of the device.

6. The device according to any of the previous claims, wherein each rib comprises a plurality of protrusions configured to engage the securing feature.

7. The device according to any of the previous claims, the device further comprising one or more conforming members along the length of a bottom of the wrapping portion of the main body, the one or more conforming members configured to further secure the one or more discrete cables when the one or more cables are circumscribed by the main body.

8. The device according to any of the previous claims, wherein the polymeric material comprises rubber, polypropylene, or nylon.

9. The device according to any of the previous claims, wherein the one or more discrete cables comprise cables selected from a group consisting of fiber optic cables, hybrid fiber/power cables and/or coaxial cables.

10. A method for holding one or more discrete cables, the method comprising:
providing a device (100) adapted for holding one or more discrete cables (130), the device comprising:
a flexible main body (102) formed of a polymeric material having a length, a width, a thickness, and a longitudinal axis, the main body including a wrapping portion (102a)
and a mounting portion (102b), wherein the wrapping portion is configured to be wrapped such that the main body circumscribes the one or more discrete cables;
a securing feature (104) attached to or integral with the mounting portion of the main body and configured to be secured to a mounting structure (150); and
a plurality of apertures (106) along the longitudinal axis of the wrapping portion of
the main body, wherein each aperture comprises a rib extending across the aperture,
wherein the securing feature is configured to be received through one of the plurality of apertures when the main body is wrapped around the one or more discrete cables;
wrapping the wrapping portion of the main body of the device around the one or more discrete cables; and
inserting the securing feature through at least one of the apertures such that the rib extending across the aperture cooperates with the securing feature, thereby holding the one or more discrete cables.

11. The method of Claim 10, further comprising: inserting the securing feature through an aperture in the mounting structure, thereby securing the device and the one or more cables to the mounting structure.

## Patentansprüche

1. Vorrichtung (100) zum Halten von Kabeln in Kombination mit einem oder mehreren separaten Kabeln (130),
wobei die Vorrichtung umfasst:
einen flexiblen Hauptkörper (102), der aus einem Polymermaterial, das eine Länge, eine Breite, eine Dicke und eine Längsachse aufweist, gebildet ist, wobei der Hauptkörper einen Wickelabschnitt (102a) und einen Befestigungsabschnitt (102b) umfasst, wobei der Wickelabschnitt konfiguriert ist, derart gewickelt zu werden, dass der Hauptkörper das eine oder die mehreren separaten Kabel umschreibt;
ein Befestigungselement (104), das an dem Befestigungsabschnitt des Hauptkörpers befestigt oder damit einstückig gebildet und konfiguriert ist, an einer Befestigungsstruktur (150) befestigt zu werden; und
mehrere Öffnungen (106) entlang der Längsachse des Wickelabschnitts des Hauptkörpers, wobei jede Öffnung angepasst ist, das Befestigungselement aufzunehmen,
wobei der Hauptkörper um das eine oder die mehreren separaten Kabel gewickelt ist und das Befestigungselement durch mindestens eine der mehreren Öffnungen aufgenommen ist und dadurch das eine oder die mehreren separaten Kabel gehalten werden,
**dadurch gekennzeichnet, dass**: jede Öffnung eine Rippe (108) umfasst, die sich über die Öffnung hinweg erstreckt, wobei die Rippe konfiguriert ist, mit dem Befestigungselement zusammenzuwirken, wenn ein oder mehrere separate Kabel gehalten werden, und optional die Vorrichtung an der Befestigungsstruktur befestigt.

2. Vorrichtung nach Anspruch 1, wobei jede Rippe senkrecht zur Längsachse des Hauptkörpers ist.

3. Vorrichtung nach einem der vorstehenden Ansprüche, wobei das Befestigungselement zwei Widerhaken umfasst, die durch einen Hohlraum getrennt sind, und der Hohlraum konfiguriert ist, beim Befestigen der Vorrichtung an der Befestigungsstruktur mit einer entsprechenden Rippe zusammenzuwirken.

4. Vorrichtung nach einem der vorstehenden Ansprüche, ferner umfassend ein Stöpselelement, das konfiguriert ist, in das Befestigungselement eingeführt zu werden, wenn das eine oder die mehreren separaten Kabel gehalten werden.

5. Vorrichtung nach einem der vorstehenden Ansprüche, ferner umfassend mehrere Wellungen zwischen dem Befestigungsabschnitt und dem Wickelabschnitt der Vorrichtung.

6. Vorrichtung nach einem der vorstehenden Ansprüche, wobei jede Rippe mehrere Vorsprünge umfasst, die konfiguriert sind, in das Befestigungselement einzugreifen.

7. Vorrichtung nach einem der vorstehenden Ansprüche, wobei die Vorrichtung ferner ein oder mehrere konforme Elemente entlang der Länge einer Unterseite des Wickelabschnitts des Hauptkörpers umfasst und das eine oder die mehreren konformen Elemente konfiguriert sind, das eine oder die mehreren separaten Kabel weitergehend zu befestigen, wenn das eine oder die mehreren Kabel von dem Hauptkörper umschrieben sind.

8. Vorrichtung nach einem der vorstehenden Ansprüche, wobei das Polymermaterial Gummi, Polypropylen oder Nylon umfasst.

9. Vorrichtung nach einem der vorstehenden Ansprüche, wobei das eine oder die mehreren separaten Kabel Kabel umfassen, die ausgewählt sind aus einer Gruppe bestehend aus Lichtwellenleiterkabeln, Hybridfaser-/Stromkabeln und/oder Koaxialkabeln.

10. Verfahren zum Halten von einem oder mehreren separaten Kabeln, wobei das Verfahren umfasst:
Bereitstellen einer Vorrichtung (100), die zum Halten von einem oder mehreren separaten Kabeln (130) angepasst ist, wobei die Vorrichtung umfasst:
einen flexiblen Hauptkörper (102), der aus einem Polymermaterial, das eine Länge, eine Breite, eine Dicke und eine Längsachse aufweist, gebildet ist, wobei der Hauptkörper einen Wickelabschnitt (102a) und einen Befestigungsabschnitt (102b) umfasst, wobei der Wickelabschnitt konfiguriert ist, derart gewickelt zu werden, dass der Hauptkörper das eine oder die mehreren separaten Kabel umschreibt;
ein Befestigungselement (104), das an dem Befestigungsabschnitt des Hauptkörpers befestigt oder damit einstückig gebildet und konfiguriert ist, an einer Befestigungsstruktur (150) befestigt zu werden; und
mehrere Öffnungen (106) entlang der Längsachse des Wickelabschnitts des Hauptkörpers, wobei jede Öffnung eine Rippe umfasst, die sich über die Öffnung hinweg erstreckt,
wobei das Befestigungselement konfiguriert ist, durch eine der mehreren Öffnungen aufgenommen zu werden, wenn der Hauptkörper um das eine oder die mehreren separaten Kabel gewickelt wird;
Wickeln des Wickelabschnitts des Hauptkörpers der Vorrichtung um das eine oder die mehreren separaten Kabel; und
Einführen des Befestigungselements durch mindestens eine der Öffnungen, sodass die Rippe, die sich über die Öffnung hinweg erstreckt, mit dem Befestigungselement zusammenwirkt und dadurch das eine oder die mehreren separaten Kabel gehalten werden.

11. Verfahren nach Anspruch 10, ferner umfassend: Einführen des Befestigungselements durch eine Öffnung in der Befestigungsstruktur und dadurch Befestigen der Vorrichtung und des einen oder der mehreren Kabel an der Befestigungsstruktur.

## Revendications

1. Dispositif (100) pour le maintien de câbles, en combinaison avec un ou plusieurs câbles discrets (130),
le dispositif comprenant :
un corps principal flexible (102) formé d'un matériau polymère ayant une longueur, une largeur, une épaisseur et un axe longitudinal, le corps principal comprenant une partie d'enveloppement (102a) et une partie de montage (102b), dans lequel la partie d'enveloppement est configurée pour être enveloppée de sorte que le corps principal circonscrit le ou les câbles discrets ;
un élément de fixation (104) fixé ou intégré à la partie de montage du corps principal et configuré pour être fixé à une structure de montage (150) ; et
une pluralité d'ouvertures (106) le long de l'axe longitudinal de la partie d'enveloppement du corps principal, chaque ouverture étant adaptée pour recevoir l'élément de fixation,
dans lequel le corps principal est enveloppé autour du ou des câbles discrets et l'élément de fixation est reçu à travers au moins une parmi la pluralité d'ouvertures, maintenant ainsi le ou les câbles discrets,
**caractérisé en ce que** : chaque ouverture comprend une nervure (108) s'étendant à travers l'ouverture, la nervure étant configurée pour coopérer avec l'élément de fixation lors du maintien d'un ou plusieurs câbles discrets et de la fixation facultative du dispositif à la structure de montage.

2. Dispositif selon la revendication 1, dans lequel chaque nervure est perpendiculaire à l'axe longitudinal du corps principal.

3. Dispositif selon l'une quelconque des revendications précédentes, dans lequel l'élément de fixation comprend deux barbes séparées par une cavité, la cavité étant configurée pour coopérer avec une nervure respective lors de la fixation du dispositif à la structure de montage.

4. Dispositif selon l'une quelconque des revendications précédentes, comprenant en outre un élément de prise configuré pour être inséré dans l'élément de fixation lors du maintien du ou des câbles discrets.

5. Dispositif selon l'une quelconque des revendications précédentes, comprenant en outre une pluralité d'ondulations entre la partie de montage et la partie d'enveloppement du dispositif.

6. Dispositif selon l'une quelconque des revendications précédentes, dans lequel chaque nervure comprend une pluralité de saillies configurées pour s'engager avec l'élément de fixation.

7. Dispositif selon l'une quelconque des revendications précédentes, le dispositif comprenant en outre un ou plusieurs éléments de conformation le long de la longueur d'un fond de la partie d'enveloppement du corps principal, le ou les éléments de conformation étant configurés pour fixer en outre le ou les câbles discrets lorsque le ou les câbles sont circonscrits par le corps principal.

8. Dispositif selon l'une quelconque des revendications précédentes, dans lequel le matériau polymère comprend du caoutchouc, du polypropylène ou du nylon.

9. Dispositif selon l'une quelconque des revendications précédentes, dans lequel le ou les câbles discrets comprennent des câbles sélectionnés parmi un groupe constitué de câbles à fibres optiques, de câbles hybrides à fibres/d'alimentation et/ou de câbles coaxiaux.

10. Procédé pour le maintien d'un ou plusieurs câbles discrets, le procédé comprenant :
la fourniture d'un dispositif (100) adapté pour le maintien d'un ou plusieurs câbles discrets (130), le dispositif comprenant :
un corps principal flexible (102) formé d'un matériau polymère ayant une longueur, une largeur, une épaisseur et un axe longitudinal, le corps principal comprenant une partie d'enveloppement (102a) et une partie de montage (102b), dans lequel la partie d'enveloppement est configurée pour être enveloppée de sorte que le corps principal circonscrit le ou les câbles discrets ;
un élément de fixation (104) fixé ou intégré à la partie de montage du corps principal et configuré pour être fixé à une structure de montage (150) ; et
une pluralité d'ouvertures (106) le long de l'axe longitudinal de la partie d'enveloppement du corps principal, dans lequel chaque ouverture comprend une nervure s'étendant à travers l'ouverture,
dans lequel l'élément de fixation est configuré pour être reçu à travers une parmi la pluralité d'ouvertures lorsque le corps principal est enveloppé autour du ou des câbles discrets ;
l'enveloppement de la partie d'enveloppement du corps principal du dispositif autour du ou des câbles discrets ; et
l'insertion de l'élément de fixation à travers au moins une parmi les ouvertures de sorte que la nervure s'étendant à travers l'ouverture coopère avec l'élément de fixation, maintenant ainsi le ou les câbles discrets.

11. Procédé selon la revendication 10, comprenant en outre : l'insertion de l'élément de fixation à travers une ouverture dans la structure de montage, fixant ainsi le dispositif et le ou les câbles à la structure de montage.
